**Europäisches Patentamt**

**European Patent Office**

**Office européen des brevets**

(19)

(11) Numéro de publication : **0 519 770 A1**

# (12) DEMANDE DE BREVET EUROPEEN

(21) Numéro de dépôt : **92401378.2**

(22) Date de dépôt : **21.05.92**

(51) Int. Cl.$^5$ : **G08C 15/00, H04L 12/28**

(30) Priorité : **21.06.91 FR 9107684**

(43) Date de publication de la demande :
**23.12.92 Bulletin 92/52**

(84) Etats contractants désignés :
**AT BE CH DE DK ES FR GB GR IT LI NL PT SE**

(71) Demandeur : **SCHLUMBERGER INDUSTRIES S.A.**
**50, avenue Jean-Jaurès**
**F-92120 Montrouge (FR)**

(72) Inventeur : **White, Trevor**
**4949 Trail Ridge Pass**
**Dunwoody, Georgia (US)**
Inventeur : **Somogyi, Tibor**
**8, Allée des Peupliers**
**F-91370 Verrières le Buisson (FR)**
Inventeur : **Fausse, Arnaud**
**70, rue Condorcet**
**F-75009 Paris (FR)**

(74) Mandataire : **Dupont, Henri**
**Schlumberger Industries Centre de Recherches SMR 50, Avenue Jean Jaurès B.P. 620-05**
**F-92542 Montrouge Cédex (FR)**

(54) **Procédé et système de transmission de messages entre une borne de contrôle et des bornes commandées.**

(57) L'invention concerne un procédé et un système de transmission de messages entre une borne de contrôle (BC) et des bornes commandées (Bi) utilisables notamment dans des installations de domotique.

Les bornes commandées (Bi) sont montées sur un réseau de transmission (2, 4, 6) relié à la borne de contrôle (BC). Les messages ont tous la même structure et comportent une zone d'émission et une zone de réception. Pour l'installation d'une nouvelle borne (Bj), on entre dans la borne une donnée spécifique à celle-ci. Elle émet vers la borne (BC) un message de demande d'installation comportant la donnée spécifique. En réponse la borne de contrôle émet un message d'installaton qui comporte toutes les informations qui sont nécessaires à la borne installée pour dialoguer avec la borne de contrôle (BC).

fig_1

EP 0 519 770 A1

La présente invention a pour objet un procédé et un système de transmission de messages entre une borne de contrôle et des bornes commandées.

De façon plus précise, l'invention concerne la transmission de message, c'est-à-dire d'instructions données entre une borne de contrôle et des bornes commandées qui sont elles-mêmes reliées entre elles par un réseau permettant le transfert de ces messages.

Il existe de nombreux cas où l'on souhaite, à partir d'un point de contrôle centralisé, commander à distance ou contrôler à distance le fonctionnement d'un certain nombre de récepteurs ou d'actuateurs. Une solution connue consiste à associer à chaque récepteur ou actuateur une borne qui reçoit des messages d'une borne de contrôle disposée au poste de commande, ces bornes élaborant elles-mêmes des signaux d'activation des récepteurs en fonction des messages reçus.

Ce type d'installation connaît un développement particulièrement important, notamment dans le domaine de la domotique. On sait que cette technique consiste notamment dans un lieu d'habitation à permettre la commande centralisée à distance d'un certain nombre de récepteurs installés dans différents locaux à partir d'une console centrale. Cette console peut être programmée pour transmettre automatiquement à des instants déterminés des instructions vers les différents récepteurs ou faire l'objet d'une commande particulière de la part des occupants des locaux pour commander à distance le fonctionnement du récepteur. Comme celà est bien connu, ces récepteurs ou actuateurs peuvent être très variés. On peut citer la commande à distance des commutateurs d'éclairage, la mise en route ou l'arrêt de postes de télévision, de magnétoscope, etc, la mise en route ou l'arrêt du chauffage, la mise en route ou l'arrêt de cuisinière électrique.

La commande à distance se fait à partir d'une borne de contrôle qui est reliée à une pluralité de bornes commandées, chaque borne étant reliée à un des récepteurs pour en commander le fonctionnement. Les bornes commandées sont raccordées par un réseau à la borne de contrôle afin que celle-ci puisse envoyer des messages d'instructions aux différentes bornes commandées et que celle-ci puisse émettre vers la borne de contrôle, par exemple des messages d'acquittement.

On comprend aisément que, dans une telle installation et en particulier dans le cas d'une installation domotique, il est très important de pouvoir modifier la structure du réseau d'interconnexion des bornes commandées à la borne de contrôle, notamment pour permettre l'adjonction de nouvelles bornes associées à de nouveaux récepteurs. Dans le cas de la domotique en particulier, il est très souhaitable que les procédures permettant l'installation de nouvelles bornes sur le réseau soient très simples pour pouvoir être mises en oeuvre par les occupants des locaux dans lesquels le réseau de commande à distance est établi sans que celà ne nécessite de connaissances particulières. Dans un tel réseau, chaque borne qu'elle soit de contrôle ou commandée est identifiée par une information spécifique qui permet, lors de l'émission, de connaître la provenance du message et, lors de la réception, de connaître le destinataire du message. En conséquence, lors de l'installation d'une nouvelle borne commandée dans le réseau, une des opérations qu'il est nécessaire de faire est de doter la nouvelle borne d'une information spécifique, de faire connaître par la borne de contrôle cette information spécifique et de faire connaître à la nouvelle borne commandée les informations spécifiques des autres bornes commandées et, plus particulièrement, de la borne de contrôle.

Un objet de la présente invention est de fournir un procédé et un système de transmission de messages entre une borne de contrôle et des bornes commandées montées dans un réseau qui permettent l'installation de nouvelles bornes commandées dans le réseau de manière simple et présentant une grande souplesse de mise en oeuvre.

Pour atteindre ce but, le procédé de transmission de messages entre une borne de contrôle et des bornes commandées reliées entre elles, pour permettre le transfert desdits messages, par un réseau défini par une information qui lui est spécifique, chaque borne commandée pouvant être montée sur ledit réseau, se caractérise en ce que, entre les bornes installées sur ce même réseau, les messages transmis comportent une zone d'informations de destination comprenant une première sous-zone pour contenir une première information d'identification de réseau et une deuxième sous-zone contenant une information spécifique à un ensemble de stations destinatrices et une zone d'informations d'émissions comportant une première zone contenant une seconde information d'identification de réseau et une deuxième sous-zone contenant une information spécifique à la borne émettrice, et en ce qu'on alloue une donnée d'identification à chaque borne commandée destinée être montée sur le réseau, de manière que cette borne émette sur le réseau un message de demande d'installation comprenant dans la zone de destination des premières et deuxièmes informations générales dans lesdites première et deuxième sous-zones et dans la zone de destination, ladite première information générale et ladite donnée spécifique à la borne émettrice dans lesdites première et deuxième sous-zones, en ce que, en réponse au message de demande d'installation, ladite borne de contrôle émet un message comprenant dans ladite zone de destination ladite première information générale et une information spécifique de la borne à installer en relation avec ladite donnée spécifique et dans ladite zone d'émission ladite information spécifique au réseau et une information spécifique à la borne de contrôle et en ce que, à la réception dudit message d'installation, ladite borne à installer mémorise ladite information qui lui est spécifique, ladite information spécifique à la borne de contrôle et ladite information spécifique au réseau par quoi ladite borne commandée est installée.

On comprend que, grâce à la procédure qui vient d'être décrite, la mise en place d'une nouvelle borne commandée est très simple puisque celle-ci est programmée pour émettre spontanément le message de demande d'installation par exemple dès que l'utilisateur a introduit la donnée spécifique dans la borne ou branché cette dernière. La suite des opérations jusqu'à l'installation effective de la nouvelle borne commandée peut se dérouler sans autre intervention de l'utilisateur du réseau.

L'invention concerne également un système pour la mise en oeuvre du procédé de transmission de message défini ci-dessus.

D'autres caractéristiques et avantages de la présente invention apparaîtront plus clairement à la lecture de la description qui suit d'un mode préféré de mise en oeuvre de l'invention donné à titre d'exemple non limitatif. La description se réfère aux figures annexées sur lesquelles :

    - la figure 1 montre un exemple de réseau d'interconnexion entre une borne de contrôle et des bornes commandées ;

    - la figure 2 montre, en perspective, un mode possible de réalisation d'une borne commandée ;

    - la figure 3 montre la forme des messages échangés entre les différentes bornes sur le réseau ; et

    - la figure 4 est un organigramme explicitant les différents messages échangés lors de l'installation d'une borne commandée.

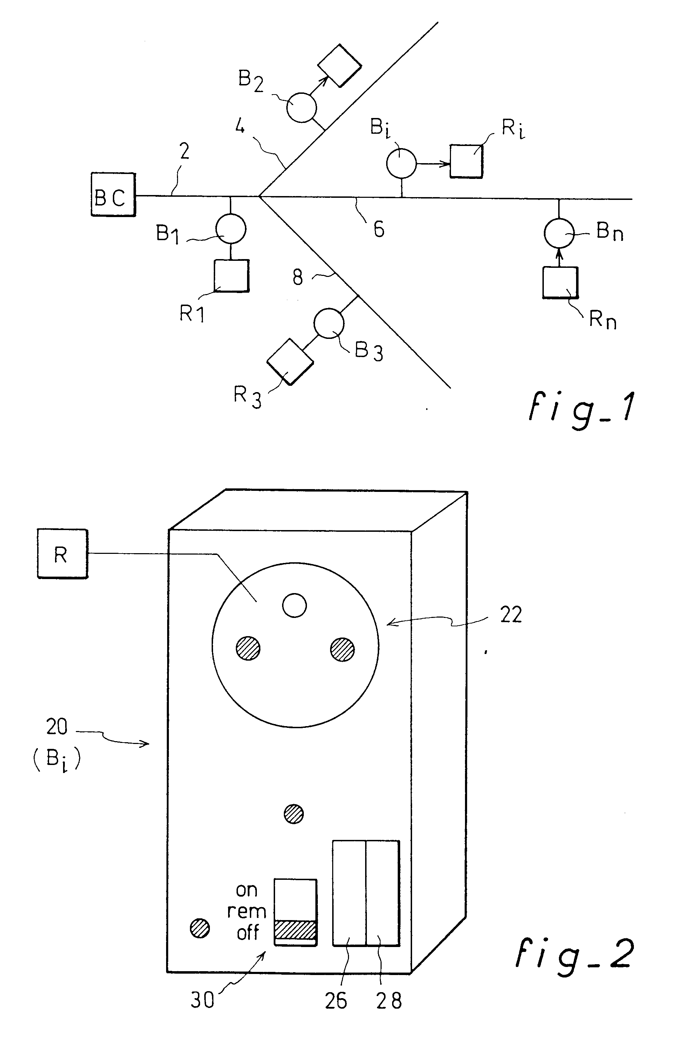

En se référant tout d'abord à la figure 1, on va décrire l'ensemble d'un réseau. Celui-ci comprend une borne de contrôle BC et une pluralité de bornes commandées B1, B2, ...Bi...Bn qui sont reliées par un réseau 2, 4, 6, 8.... à la borne de contrôle BC. Le réseau peut être d'une forme quelconque, il peut s'agir d'un réseau de transmission d'informations par fil conducteur, de transmission d'informations sous forme de rayonnement infra-rouge, sous forme d'onde radio, etc. En outre, le réseau peut être de nature différente selon les parties du réseau considérées, à condition bien sûr que celui-ci comporte des organes de couplage entre les portions de réseau de nature différente. On a référencé R1, R2...Ri...Rn les récepteurs ou actuateurs qui sont commandés par la borne correspondante.

Le mode de transmission des messages entre les différentes bornes est le suivant : lorsqu'une borne émet un message, toutes les autres bornes écoutent. Comme on l'expliquera ultérieurement, chaque message comporte une adresse de destination qui permet ainsi à la borne destinatrice de recevoir effectivement ce message par comparaison avec des informations déjà stockées dans sa mémoire, les autres bornes n'en tenant pas compte. Si plusieurs bornes veulent émettre en même temps le protocole général du système règle le problème de collision des messages. Il s'agit de problèmes bien connus dans ce genre d'installations. On ne le décrira pas plus en détail.

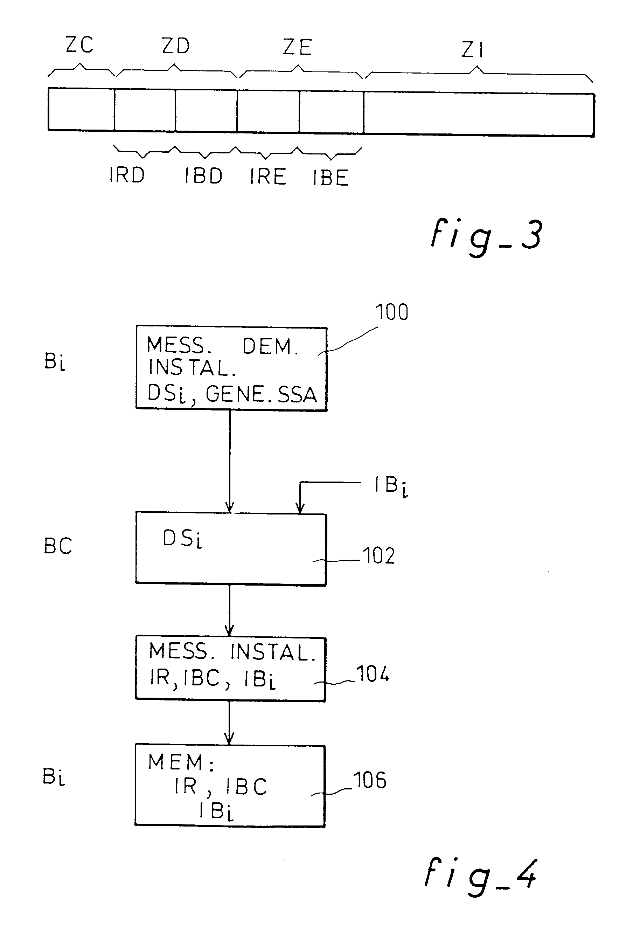

La figure 3 montre le format commun à tous les messages échangés entre les différentes bornes du réseau. Le message comprend une zone de contrôle ZC, par exemple de huit bits, une zone de destination ZD, une zone d'émission ZE et une zone d'information ZI. A son tour, la zone de destination ZD est partagée en une sous-zone d'information de réseau de destination IRD et une deuxième sous-zone d'information de borne de destination IBD. Symétriquement, la zone d'émission ZE comporte deux sous-zones correspondant respectivement à l'information de réseau d'émission IRE et une information de borne d'émission IBE.

Lors de l'utilisation normale du réseau, c'est-à-dire lors du dialogue entre des bornes commandées installées, les informations contenues dans les sous-zones IRD et IRE sont les mêmes et caractéristiques du réseau considéré. Cette information permet de séparer deux réseaux qui seraient physiquement interconnectés à une même borne de contrôle BC. L'information IBD consiste dans une adresse spécifique de la borne de destination du message et l'information IBE consiste dans une information spécifique de la borne émettrice du message. La zone ZI comporte l'information qui doit être transmise à la borne dont l'adresse est définie par l'information IBD, combinée avec l'information de réseau IR.

Par exemple, les deux sous-zones de destination peuvent comporter chacune seize bits, les deux sous-zones d'émission peuvent également comporter seize bits et la zone d'information comporte au maximum trente-deux octets.

Comme on l'a déjà expliqué succinctement, le principe de l'invention, en ce qui concerne l'installation d'une nouvelle borne commandée sur le réseau, consiste à faire émettre par celle-ci un message comportant dans la zone de destination ZD une information identifiable par toutes les bornes du réseau, notamment par la borne de contrôle BC, et dans la zone d'émission ZE une valeur spécifique de IRE et une donnée spécifique à la borne à installer comme valeur de IBE. Cette valeur particulière de message indique à la borne de contrôle BC qu'une nouvelle borne commandée est à installer. A la réception de ce message, la borne de contrôle BC va émettre une série de messages permettant l'installation effective de la borne commandée.

Sur la figure 2, on a représenté un exemple de réalisation d'une borne commandée 20. Celle-ci comporte une sortie électrique de puissance 22 pour commander électriquement le récepteur R qui lui est associé. La borne 20 comporte, par exemple, deux organes d'entrée d'informations alphanumériques 26 et 28. Chaque organe d'entrée est par exemple une couronne ou roue codeuse permettant d'élaborer seize valeurs numériques distinctes. En actionnant les deux organes d'entrée 26 et 28 il est donc possible d'entrer dans une mémoire de la borne l'information numérique particulière ainsi élaborée. La borne 20 comporte enfin un commutateur 30 de commande d'état de la borne. Ce commutateur permet soit une commande locale du récepteur R associé à la borne, soit une commande à distance à partir de la borne de contrôle du réseau sur lequel la borne commandée est installée. Le commutateur 30 peut prendre une position ON ou une position OFF dans le cas d'une commande locale et la position intermédiaire REM lorsqu'on veut commander la borne à distance, ce qui constitue bien sûr l'objet de la présente invention. En outre, la borne Bi comporte des circuits électroniques, non représentés sur la figure 2. Pour la compréhension de l'invention, il suffit de dire que ces circuits comprennent une mémoire du type E2PROM, de telle manière que les informations stockées dans la mémoire ne puissent être perdues même en cas de défaillance du réseau d'alimentation électrique. Cette mémoire comprend une zone réservée pour l'écriture de données, notamment acquises, lors de l'installation de la borne. Elle comprend également des informations fixes permettant de commander le récepteur R qui lui est associé en fonction des instructions reçues de la borne de contrôle BC.

En se référant maintenant à la figure 4, on va décrire la procédure d'installation de la borne Bi dans le réseau. Dans un premier temps, l'utilisateur du réseau entre dans la borne Bi à l'aide des commutateurs 26, 28 une donnée spécifique à la borne DSi. En réponse à l'entrée de cette information, la borne Bi émet sur le réseau un message de demande d'installation correspondant à l'étape 100. Comme on l'a déjà indiqué, le message de demande d'installation est de la forme explicitée précédemment. Plus précisément, la seule information particulière qu'il contienne est la donnée spécifique DSi dans la sous-zone IBE. Plus précisément, l'information d'adresse de borne IBD prend une valeur spécifique SSA qui est identifiable par toutes les bornes déjà installées et donc par la borne de contrôle BC. SSA est l'information de destination utilisée par la borne de contrôle BC, en fonctionnement normal, pour envoyer un message à toutes les bornes commandées. L'information de réseau IR dans les sous-zones IRE et IRD prend une valeur spécifique GENE qui est également identifiable par la borne de contrôle BC. On comprend que les informations GENE et SSA sont stockées initialement dans une mémoire ROM de chaque borne commandée. Cela ne présente aucun inconvénient puisque ces informations peuvent être communes à tous les systèmes conformes à l'invention, indépendamment de l'installation particulière considérée.

Lorsque la borne de contrôle BC (étape 102) reçoit le message de demande d'installation, les opérations suivantes sont effectuées : à la réception de ce message, la borne BC détecte la nature particulière du message transmis et en déduit qu'il s'agit d'une demande d'installation. Elle mémorise la donnée spécifique DSi. A ce stade, l'utilisateur du réseau a la possibilité de remplacer l'information spécifique liée à la borne par une information de borne qui sera plus explicite de la nature de celle-ci. Si telle est le cas, la donnée spécifique DSi est convertie en une information de borne IBi qui sera l'adresse de la borne Bi dans le réseau. Puis, la borne BC élabore un message d'installation correspondant à l'étape 104. Le message d'installation a bien sûr le même format que tous les messages échangés sur le réseau. Ce message d'installation comporte dans la zone ZD l'information IRD correspondant à l'information de réseau GENE et, dans la deuxième sous-zone, l'information IBD qui, dans ce cas particulier, est égal à l'information IBi associée à la borne à installer. Dans la zone ZE la première sous-zone comporte à nouveau comme valeur de IRE la valeur IR du réseau et comme valeur IBE la valeur IBC qui correspond à l'adresse de la borne de commande.

Lorsque ce message d'installation est émis par la borne de commande sur le réseau, seule la borne Bi peut établir une relation entre l'information de destination IBi et la donnée spécifique DSi qu'elle avait émise initialement. En conséquence, seule la borne Bi reçoit le message d'installation. C'est l'étape 106 de la figure 4.

A la réception de ce message d'installation, la borne Bi stocke dans sa mémoire E2PROM son information spécifique IBi qui se substitue à la donnée initiale DSi, l'information de réseau IR et l'information spécifique de la borne de commande ou borne de contrôle IBi. Une fois que la borne Bi a mémorisé d'une part son information spécifique ISi, c'est-à-dire son adresse sur le réseau, l'information de réseau IR et l'information spécifique, c'est-à-dire l'adresse IBC de la borne de contrôle, la borne Bi est installée. En effet, à chaque émission par la borne de contrôle ou par toute autre borne commandée d'un message, elle est capable de déterminer si ce message lui est destiné puisqu'elle connaît l'information de réseau IR et qu'elle est capable de comparer la portion d'information contenue dans la sous-zone IBD à son adresse IBi et que, en retour, elle est capable d'émettre vers la borne de contrôle un message par exemple d'acquittement à partir de son information spécifique et de l'information de réseau et de l'information spécifique de la borne de commande.

En fait, la borne Bi à installer émet un premier message de demande d'installation lorsque la donnée spécifique DSi est introduite. Elle re-émet ce même message toutes les 15 secondes tant qu'elle n'a pas reçu en retour le message d'installation. Si au bout de 5 minutes, la borne Bi n'a pas reçu de la borne de contrôle le message d'installation, elle cesse d'émettre. Pour initier une nouvelle procédure d'installation de cette même borne, il est nécessaire d'entrer dans cette borne une nouvelle donnée spécifique DSi.

La borne commandée Bi reste dans l'état installé tant que l'utilisateur ne modifie pas la donnée spécifique DSi de cette borne en agissant sur les commutateurs 26 et 28. Si l'utilisateur effectue cette opération, la borne Bi va émettre à nouveau un message de demande d'installation sur le réseau comme cela a déjà été décrit précédemment.

Dans la description précédente de fonctionnement du réseau, les bornes Bi sont commandées individuellement par la borne de contrôle BC à l'aide de messages envoyés séparément à chacune des bornes commandées. Il est cependant possible de réaliser la commande simultanée de plusieurs bornes à l'aide de la même instruction. Pour celà, on entre, dans la borne de contrôle, la liste des adresses des différentes bornes Bi qui doivent être commandées simultanément au moins pour certains types d'opérations. Les messages correspondants comportent dans la zone d'information ZI la liste des différentes bornes concernées. Pour ce faire, chaque borne Bi d'un groupe stockera en mémoire E2PROM la liste des adresses IBj des autres bornes du groupe. Une fois que les adresses des différentes bornes d'un même groupe sont stockées dans les mémoires des bornes concernées, un message comportant l'adresse d'une des bornes du groupe sera reçu, par comparaison, par toutes les bornes de ce groupe et exécuté par celles-ci.

## Revendications

1. Procédé de transmission de messages entre une borne de contrôle et des bornes commandées reliées entre elles pour permettre le transfert desdits messages, par un réseau défini par une information (IR) qui lui est spécifique, chaque borne commandée pouvant être montée sur ledit réseau, caractérisé en ce que, entre les bornes installées sur ce même réseau, les messages transmis comportent une zone d'information de destination (ZD) comprenant une première sous-zone (IRD) pour contenir une information d'identification de réseau (IRD) et une deuxième sous-zone (IBD) pour contenir une information spécifique à la station destinatrice et une zone d'information d'émission (ZE) comportant une première sous-zone (IRE) pour contenir une seconde information d'identification de réseau et une deuxième sous-zone (IBE) pour contenir une information spécifique à la borne émettrice ; et en ce qu'on alloue une donnée d'identification (DSi) à chaque borne commandée (Bi) destinée à être montée sur le réseau, de manière que cette borne (Bi) émette sur le réseau un message de demande d'installation comprenant dans la zone de destination (ZD) des première et deuxième informations générales (GENt, SSA) dans lesdites première et deuxième sous-zones et dans la zone d'émission (ZE) ladite première information générale (GENE) et ladite donnée spécifique (DSi) à la borne émettrice dans lesdites première et deuxième sous-zones ; en ce qu'en réponse audit message de demande d'installation, ladite borne de contrôle (BC) émet un message comprenant dans ladite zone de destination (ZD) ladite première information générale (GENE) et une information (IBi) spécifique de la borne à installer en relation avec ladite donnée spécifique (DSi) et dans ladite zone d'émission (ZE) ladite information (IR) spécifique au réseau et une information (IBC) spécifique à la borne de contrôle ; et en ce que, à la réception dudit message d'installation, ladite borne à installer (Bi) mémorise ladite information (IBi) qui lui est spécifique, ladite information (IBC) spécifique à la borne de contrôle (BC) et ladite information (IR) spécifique au réseau, par quoi ladite borne commandée est installée.

2. Procédé selon la revendication 1, caractérisé en ce que, lors de son intallation, ladite borne commandée à installer émet ledit message de demande d'installation avec une périodicité prédéterminée jusqu'à ce qu'elle reçoive le message d'installation, ou jusqu'à l'expiration d'une durée prédéterminée.

3. Procédé selon l'une quelconque des revendications 1 et 2, caractérisé en ce que les informations mémorisées dans chaque borne commandée (Bi) installée restent mémorisées jusqu'à ce qu'on introduise dans ladite borne (Bi) une nouvelle donnée spécifique.

4. Procédé selon l'une quelconque des revendications 1 à 3, caractérisé en ce que ladite première information générale (GENE) est connue initialement de toutes les bornes commandées (Bi) et de la borne de commande.

5. Système pour la transmission de messages entre une borne de contrôle et des bornes commandées reliées entre elles par un réseau pour permettre le transfert desdits messages, chaque borne commandée pouvant être montée sur ledit réseau, caractérisé en ce que chaque borne commandée (Bi) comporte des moyens (26, 28) pour mémoriser une donnée spécifique (DSi) à ladite borne (Bi); chaque borne (BC, Bi) comprend des moyens pour émettre des messages comportant une zone d'information de destination (ZD) comprenant une première sous-zone pour contenir une information d'identification du réseau (IRD) et une deuxième sous-zone (IBD) pour contenir une information spécifique à la station destinatrice et une zone d'information d'émission (ZE) comportant une première sous-zone (IRE) pour contenir ladite information d'identification du réseau et une deuxième sous-zone (IBE) pour contenir une information spécifique à la borne émettrice ; et en ce que ladite borne (Bi) comprend des moyens pour émettre sur le réseau, en réponse à une sollicitation déclenchant son installation sur ce dernier, un message de demande d'installation comprenant dans la zone de destination (ZD) des première et deuxième informations générales (GENE, SSA) dans lesdites première et deuxième sous-zones et dans la zone d'émission (ZE) ladite première information générale (GENE) et ladite donnée spécifique (DSi) à la borne émettrice dans lesdites première et deuxième sous-zones ; ladite borne de contrôle (BC) comprend des moyens pour, en réponse audit message de demande d'installation, émettre un message comprenant dans ladite zone de destination (ZD) ladite information d'identification du réseau (IR) et une information spécifique (IBi) de la borne à installer en relation avec ladite donnée spécifique (DSi) et dans ladite zone d'émission (ZE) ladite information spécifique au réseau (IR) et ladite information spécifique (IBC) à la borne de contrôle ; et ladite borne commandée (Bi) comprend des moyens pour, en réponse audit message d'installation, mémoriser ladite information (IBi) qui lui est spécifique, ladite information spécifique (IBC) à la borne de contrôle (BC) et ladite information spécifique au réseau (IR), par quoi ladite borne commandée est installée.

6. Système selon la revendication 5, caractérisé en ce que lesdits moyens (26, 28) pour mémoriser une donnée spécifique dans la borne commandée comprennent au moins une roue codeuse.

$B_2$

4

2

$B_i$ $R_i$

BC

$B_1$

6

$B_n$

8

$R1$

$R_n$

$R_3$ $B_3$

*fig_1*

R

22

20
($B_i$)

on
rem
off

30 26 28

*fig_2*

ZC      ZD       ZE        ZI

IRD   IBD   IRE   IBE

*fig_3*

$B_i$

| MESS.   DEM. INSTAL. $DS_i$, GENE. SSA | 100 |

$IB_i$

$BC$

| $DS_i$ | 102 |

| MESS.  INSTAL. IR, IBC, $IB_i$ | 104 |

$B_i$

| MEM: IR, IBC $IB_i$ | 106 |

*fig_4*

Office européen
des brevets

**RAPPORT DE RECHERCHE EUROPEENNE**

Numero de la demande

EP   92 40 1378

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 706 379 (REGULEX)<br>* page 5, ligne 9 - page 6, ligne 19 *<br>* page 7, ligne 23 - page 8, ligne 11 *<br>* page 12, ligne 35 - page 14, ligne 34; figures 1-8 *<br><br>--- | 1,5 | G08C15/00<br>H04L12/28 |
| A | EP-A-0 174 804 (MITSUBISHI DENKI KABUSHIKI KAISHA)<br>* page 5, ligne 20 - page 6, ligne 5 *<br>* page 9, ligne 5 - page 12, ligne 20; revendications 1,2,4; figures 1,4,5 *<br><br>--- | 1,5 | |
| A | IEEE TRANSACTIONS ON CONSUMER ELECTRONICS.<br>vol. 36, no. 3, Août 1990, NEW YORK US<br>pages 612 - 618;<br>R. VAN DOOTINGH: 'ESPRIT HOME SYSTEMS PROJECT'<br>* page 616, alinéa 4.4 *<br><br>----- | 1,5 | |

**DOMAINES TECHNIQUES RECHERCHES (Int. Cl.5)**

G08C
H04Q
G06F
H04L

Le présent rapport a été établi pour toutes les revendications

| Lieu de la recherche | Date d'achèvement de la recherche | Examinateur |
|---|---|---|
| LA HAYE | 05 AOUT 1992 | WANZEELE R.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P0402)